Europäisches Patentamt

European Patent Office

Office européen des brevets

(11) Publication number: **0 300 624**
**A2**

## EUROPEAN PATENT APPLICATION

(21) Application number: 88305839.8

(51) Int. Cl.⁴: **C08F 8/44 , C09J 3/14**

(22) Date of filing: 24.06.88

(30) Priority: 21.07.87 US 76153

(43) Date of publication of application:
25.01.89 Bulletin 89/04

(84) Designated Contracting States:
**BE DE ES FR GB IT NL SE**

(71) Applicant: **REICHHOLD CHEMICALS, INC.**
**525 North Broadway**
**White Plains, N.Y. 10603(US)**

(72) Inventor: **Komitsky, Frank, Jr.**
**6531 Chardonnay Lane**
**Pensacola Florida 32504(US)**
Inventor: **Thompson, Kerry L.**
**4041 Olive Road, Apt. 456**
**Pensacola Florida 32514(US)**
Inventor: **Evans, James M.**
**1200 Ft. Pickens Road, Apt. 8B**
**Pensacola Beach Florida 32561(US)**
Inventor: **Ocampo, Edwardo**
**4471 LaJolla**
**Pensacola Florida 32504(US)**
Inventor: **Patel, Vinod**
**7995 Coronet Court**
**Pensacola Florida 32514(US)**

(74) Representative: **Austin, Hedley William et al**
**Urquhart-Dykes & Lord Alexandra House 1**
**Alexandra Road**
**Swansea West Glamorgan SA1 5ED(GB)**

(54) Water dispersible tackifier resins.

(57) Polymers of cyclopentadiene with or without other olefins which have been reacted with carboxylic acids to yield resins having carboxyl functionality. These resins are treated with a base to form an ionizable resin which can be readily dispersed in water without a surfactant. Water dispersions of the ionizable resins are compatible with a number of elastomeric latices and can be mixed therewith to form adhesive compositions.

EP 0 300 624 A2

## WATER DISPERSIBLE TACKIFIER RESINS

## BACKGROUND OF THE INVENTION

### 1. FIELD OF THE INVENTION

The present invention relates to resinous materials which are useful as tackifiers in latex adhesive formulations. Tackifiers are materials which are added to latex adhesive dispersions to improve the tackiness or stickiness of the adhesive, particularly in pressure sensitive adhesives.

### 2. DESCRIPTION OF THE PRIOR ART

Latex adhesives are known which contain tackifiers such as rosin derivatives, hydrocarbons, terpenes, etc., which are emulsified in the adhesive formulation with the aid of surfactants such as potassium oleate and a stabilizing agent such as casein. However, such surfactants and stabilizers contribute to poor adhesive properties and to increased water sensitivity of the latex adhesive formulation.

U.S. Patent 4,183,834 to Evans et al relates to tackifier dispersions for elastomeric latices made from modified rosin acids formed from the reaction product of a rosin, a carboxylic acid and a $C_1$ to $C_{18}$ mono-alcohol. While such tackifier dispersions have been found suitable in carboxylated butadiene-styrene (SBR) elastomer latices, they have proved less suitable as tackifiers with natural rubber, acrylic, and other latices.

Furthermore, the presence of monomeric rosin acid and decarboxylated rosin acid can lead to the problem of "bleed through", a phenomenon caused by the migration of these low molecular weight species through a tape or label backing on which an adhesive containing the tackifiers has been coated.

U.S. Patent 4,670,504 to Cardenas et al discloses a tackifier composition comprising a latex and a water dispersible resinous tackifier. The tackifier composition is reactive with an ionizing agent and the resinous composition is the reaction product of a catalytically polymerized unsaturated hydrocarbon resin, condensed with an unsaturated carboxylic acid or anhydride, and partially esterified with a $C_1$-$C_{30}$ alcohol or phenol.

## SUMMARY OF THE INVENTION

The present invention provides tackifier compositions for elastomeric latices which are readily dispersed or emulsified in water without the aid of surfactants. The tackifier compositions are useful with a wide range of elastomeric latices and avoid problems of "bleed through" because they do not contain appreciable amounts of low molecular weight monomeric species.

The tackifier resins of this invention are polymers of cyclopentadiene with or without other olefins which have been reacted with carboxylic acids or derivatives to yield resins having carboxyl functionality. These resins are treated with a base to form an ionizable resin which can be readily dispersed in water without a surfactant. Water dispersions of the ionizable resins are compatible with a number of elastomeric latices and can be mixed therewith to form adhesive compositions.

## DESCRIPTION OF THE PREFERRED EMBODIMENTS

In accordance with the present invention, a water dispersible resin composition is prepared by:

(1) polymerizing a suitable olefin or mixture of olefins, preferably by heating under pressure;

(2) reacting the polymer thereby obtained with a suitable acid, such as a carboxylic acid or derivative thereof to form an acid functional polymer, or carboxylated polymer resin;

(3) neutralizing the acid functional polymer with a suitable base to produce an ionizable resin product that is readily dispersible in water, and can then be admixed with an elastomeric latex to produce an adhesive composition.

More specifically, the polymerization of the olefins generally has a reaction time of about 4 hours at about 250°C. However, shorter or longer reaction times can be expected depending upon the specific mixture of monomers, or reaction temperatures. Similarly, other temperature ranges can also be suitable with various reaction times and monomer mixtures, on the order of from about 100°C to 400°C.

The reaction of the polymer with the suitable acid can be accomplished in the presence or absence of a catalyst, and at elevated temperature, from about 100°C to 300°C, preferably from about 175-200°C. Alternatively, the acid or acid derivative can be condensed with the polymer during the thermal polymerization of the olefin.

The acid functional polymer can also be modified, for example, by being hydrogenated in the presence of a catalyst to produce a product of different compatibility with enhanced light and oxidation stability and lighter color. Other modifications, for example graft polymerization, partial oxidation, or Diels-Alder condensation, can also be employed to obtain desired characteristics, such as different compatibilities or polarities or enhanced stability to heat, light or oxygen.

The preferred olefin is dicyclopentadiene (DCPD). The polymerizable olefin can also consist of mixtures varying from about 10 to 100%, preferably 40 to 95% dicyclopentadiene; about 0 to 70%, preferably 5 to 40%, terpene monomer such as alpha-pinene, beta pinene, limonene, or dipentene; and about 0 to 70%, preferably 0-25%, styrene. The olefin polymerization can also be conducted in the presence of rosin acid mixtures, acrylic acid, maleic acid and maleic anhydride, in amounts calculated to give an acid number from about 10 to 150, preferably from about 20 to 40.

The dicyclopentadiene can also be replaced partially or wholly by substituted dicyclopentadienes such as di(methylcyclopentadiene). The commercial dicyclopentadiene or methylcyclopentadiene dimer is commonly accompanied by 5 to 50% of Diels-Alder "codimers" of $C_5$ dienes, such as isoprene and piperylene and alkenes such as butenes, pentenes, methyl pentenes, and similar $C_6$ alkenes, or by about 5 to 50% $C_8$ to $C_{10}$ petroleum based aromatic hydrocarbons consisting of a mixture of styrene, methylstyrenes, indene, methylindenes, and other compounds, such as the "$C_9$ resin oil" of commerce.

It is also contemplated that the alpha-pinene and styrene can be replaced partially or wholly by other terpenes or non-terpene hydrocarbons, such as beta-pinene, limonene, dipentene, delta-3-carene, delta-2-carene, various menthadienes, myrcene, allo-ocimene, or mixtures thereof. Non-terpene hydrocarbons can also include styrene, alpha-methylstyrene, beta-methylstyrene, o-, m-, and p-vinyl toluenes, isoprene, piperylene, butadiene, propylene, butenes, isobutene, pentenes and cyclopentenes, hexenes and cyclohexenes, "$C_9$" fractions as noted previously, derived from petroleum or coal tar, as well as other alkenes and polyenes of 2 or more carbons, including polymeric alkenes such as the alpha-olefins and polyisobutylene.

The cyclopentadiene polymers can be acid functionalized by including a suitable acid such as maleic anhydride, acrylic acid, or a mixture of rosin acids in the polymerization mixture. Alternatively, the polymer can be functionalized by heating it with maleic anhydride, fumaric acid, itaconic acid, or other suitable unsaturated acids or derivatives subsequent to the polymerization.

The imparting of acid functionality can be performed at any stage of the polymerization as well as subsequently or simultaneously during the polymerization. Other suitable acids or acid derivatives include gum, tall oil, or wood rosin, itaconic acid, methacrylic acid, maleic acid, fumaric acid, unsaturated fatty acids such as linoleic or linolenic, alkenyl sulfonic, sulfuric, phosphinic, phosphorus, or phosphoric acids, as well as corresponding derivatives such as esters, anhydrides, or salts.

The acid functionalized polymers can be converted to ionizable resins by neutralizing with a base to form an ionizable product readily dispersible in water. A preferred base for this purpose is N,N-dimethylaminoethanol. Other suitable bases include inorganic hydroxides such as sodium hydroxide, potassium hydroxide and ammonium hydroxide or other organic amines including ethanolamine, triethanolamine, tributylamine, piperylene, and diethanolamine. After neutralizing the acid functional polymers, dispersions and emulsions of the resin can be prepared by adding water to the molten neutralized resin or water and neutralizing agent to the unneutralized resin at either ambient conditions, or under pressure. Alternatively, the molten neutralized resin can be added to water, or the unneutralized molten resin to neutralizing agent in water or a simultaneous combination of the two phases can also produce a satisfactory dispersion or emulsion.

Dispersions or emulsions of other types of tackifying resins can be produced by mixing an appropriate quantity of the acid functionalized polymer with said resin, neutralizing and dispersing as above. These would include polyterpene resins, terpene phenols, rosin, polymerized rosin, rosin esters, and the $C_5$ and $C_9$ hydrocarbon resins of commerce as well as mixtures of the above. The acid number of the mixture

3

would preferably be about 10 to 150.

The acid functional polymer of the present invention can have a softening point of from below room temperature to about 150°C, and an acid number sufficient to allow dispersion of the resin, preferably about 10 to 150.

Although normally it would be preferable to include no surfactant in a tackifier resin dispersion, it would be expected that addition of such, including fatty acid salts, sulfonate salts, silicones, polyglycols, and others would allow more ready dispersion of these resins.

A specific modification of the invention would include adding various monomers to the polymerization mixture which will serve to increase the adhesion of the adhesive material to various substrates. Such monomers would include allyl alcohol, acrylonitrile, acrylic or methacrylic esters, fumarate or maleate esters, carboxyalkyl substituted alkenes and other vinyl functional derivatives.

In order to produce an adhesive composition, the emulsions or dispersions prepared as described above are then mixed with suitable latices. A commonly used latex for this purpose is a carboxylated butadiene-styrene latex. However, a distinguishing characteristic of the cyclopentadiene polymers of the invention when used as tackifier resins is that they are useful with a wide range of natural and synthetic latices. For example, they can be used with natural rubber latices, acrylic latices or chloroprene rubber latices.

The adhesive compositions described above may be used for a variety of adhesive applications including laminations of various materials, adhesive tapes, and labels. To produce tapes or labels, for example, the adhesive compositions may be spread as coatings on a suitable backing such as a polyester film. A suitable coating weight can be about 20 pounds per ream, one ream being equal to 3,000 square feet. After the film is coated with the adhesive, it is heated at a suitable temperature of about 70° for approximately five minutes in order to fuse the coating and the fused coating is then dried for several minutes in an oven at a suitable temperature of about 90°.

The following examples will serve to illustrate the invention.


## Example 1


A mixture was made of alpha-pinene (800 grams) and dicyclopentadiene (1200 grams) of approximately 70% purity, containing 30% "co-dimers" of $C_5$ dienes and alkenes with each other and cyclopentadiene. The mixture was heated to 250°C in an autoclave and maintained at this temperature for 4 hours under a pressure of 75 to 125 psig with agitation. After cooling to 100°C, the reaction mixture was vented and poured into a 3 liter, 3 neck, round bottom flask. After steam sparging for one hour at 200°C, the resin melt was poured into molds. The yield was 1230 grams (61.5%) and it had a ball and ring softening point of 90°C.

1000 grams of the resin was melted under $N_2$ in a 3 neck round bottom flask. With agitation, 26.2 grams of maleic anhydride was added and the temperature was rapidly raised to 190°C where it was maintained for 1 1/2 hours. On cooling, 1025 grams of product was obtained with ball and ring softening point 95°C, acid number 13.5, saponification number 29.4.

1000 grams of the resin was placed in an autoclave, melted, and the temperature adjusted to 130°C. 50 grams of N,N-dimethylaminoethanol was added and the mixture stirred for 1/2 hour. 875 grams of water was added over 1 hour with agitation and the dispersion was allowed to cool to ambient temperature. The yield was approximately 1915 grams of a 54.8% solids dispersion, viscosity 40 centipoise, average particle size 0.45 micron.


## Example 2


A mixture of 800 grams of dicyclopentadiene (70% purity) as in Example 1, 500 grams of styrene, and 700 grams of alpha-pinene were heated to 250°C in an autoclave and maintained under a pressure of 75-125 psig for 4 hours at that temperature. After cooling to 100°C, the reaction mixture was vented and poured into a 3 liter, 3 neck, round bottom flask. Steam sparging at 200°C for 1 hour yielded 1540 grams of resin with a ring and ball softening point of 60°C.

After sparging, the temperature of the resin was adjusted to 190°C and 40.3 grams of maleic anhydride was added with agitation. After maintaining a temperature of 190°C for 1 1/2 hours, the resin was cooled to 95°C and had a ball and ring softening point of 66°C, and an acid number of 14.3.

77 grams of N,N-dimethylaminoethanol was added and the mixture was stirred for 1/2 hour at 95°C. 1115 grams of water was added over approximately 1 hour, maintaining the temperature at 95°C. The dispersion that formed was then allowed to cool to ambient temperature. The yield was approximately 2650 grams of a 58.0% solids dispersion, viscosity 650 centipoise, average particle size 0.29 micron.

## Example 3

1600 grams of gum rosin was placed in an autoclave under a nitrogen atmosphere and heated to 260°C under 75 to 125 psig pressure. Over a period of 2 1/2 hours, 400 grams of commercial 50% purity dicyclopentadiene containing approximately 50% "$C_9$" aromatic hydrocarbons was pumped into the autoclave. After maintaining the 260°C temperature an additional 2 hours, the reaction mixture was cooled and vented. The yield was 2000 grams with ball and ring softening point 72°C, acid number 87.3.

200 grams of the resin product was melted in a 1 liter 3 neck flask under $N_2$ and adjusted to 95°C. 28.0 grams of N,N-dimethylaminoethanol was added and the mixture stirred 1/2 hour. Over a period of 1 hour, 342 grams of water was added with agitation at 95°C. The yield was approximately 570 grams of a 40.0% solids dispersion, viscosity 1375 centipoise at 30°C, particle size 0.67 micron.

## Example 4

1395 grams of commercial 50% purity DCPD containing approximately 50% "$C_9$" aromatic hydrocarbons was placed in an autoclave under a nitrogen atmosphere and heated to 90°C. Maintaining this temperature, 605 grams of molten tall oil rosin was pumped into the autoclave. The stirred reaction mixture was heated to 265°C over a period of 2-3/4 hours. After maintaining the 265°C temperature an additional 2 hours, the reaction mixture was cooled and vented. Yield 2000 grams.

The balsamic resin was placed in a 3-neck flask under nitrogen, 52.4 grams maleic anhydride was added, and the temperature rapidly adjusted to 190°C. After maintaining the 190°C temperature for 3 hours, the reaction mixture was sparged at 190°C to 200°C until the Ball and Ring softening point of the resin reached 60°C to 61°C. The acid number of the product was 22.27.

The resin was cooled to 95°C, 100 grams of N,N- dimethylaminoethanol was added, and the mixture stirred one-half hour. Over a period of one hour, 1730 grams of distilled water was added with agitation at 95°C. The yield was approximately 3760 grams of a 54.0% solids dispersion, viscosity 1100 Centipoise at 25°C, average particle size 0.21 micron.

## Examples 5-13

As indicated in Table 1, which follows, different mixtures of alpha-pinene and styrene were copolymerized with dicyclopentadiene in various proportions by heating in an autoclave at 250°C for 4 hours, cooling, venting, and steaming off unpolymerizable monomers as in the previous examples. The polymer obtained was heated to 190°C for 1 1/2 hours with maleic anhydride. The acid functional polymer was then neutralized with N,N-dimethylaminoethanol and dispersed by melting and adding water. In those cases where the functionalized polymer had a softening point in excess of 90°C, the dispersion was carried out under pressure at a temperature sufficiently high to melt the polymer, usually 20 to 30°C above the softening point.

## TABLE 1

| | | | | | BALL & RING SOFTENING POINT | | | DISPERSION PROPERTIES | | |
|---|---|---|---|---|---|---|---|---|---|---|
| WATER-DISPERSIBLE TACKIFIER RESINS | | | | | | | | | | |
| EXAMPLE NUMBER | DCPD (g) | ALPHAPINENE (g) | STYRENE (g) | YIELD (%) | RESIN | MALEINIZED RESIN | MALEINIZED RESIN ACID NUMBER | SOLIDS (%) | VISCOSITY (cp) | PARTICLE SIZE ($\mu$) |
| 5 | 1400 | 600 | --- | 71 | 111°C | 120°C | 13.7 | 50.0 | 145 | 0.85 |
| 6 | 1000 | 1000 | --- | 58 | 77°C | 84°C | 14.0 | 52.0 | 150 | 0.23 |
| 7 | 1500 | ---- | 500 | 97 | 130°C | 141°C | 15.0 | 50.0 | 225 | 0.90 |
| 8 | 1000 | 500 | 500 | 70 | 95°C | 105°C | 14.6 | 51.0 | 235 | 0.60 |
| 9 | 900 | 600 | 500 | 72 | 90°C | 106°C | 28.5 | 50.0 | 175 | 0.45 |
| 10 | 850 | 650 | 500 | 72 | 80°C | 88°C | 13.5 | 60.0 | 1120 | 0.30 |
| 11 | 850 | 850 | 300 | 71 | 65°C | 71°C | 11.0 | 57.0 | 1160 | 0.21 |
| 12 | 950 | 950 | 100 | 69 | 67°C | 75°C | 11.2 | 56.9 | 570 | 0.21 |
| 13 | 1190 | 510 | 300 | 82 | 71.5°C | 83.5°C | 13.0 | 56.0 | 500 | 0.23 |

EP 0 300 624 A2

Example 14

ADHESIVE PERFORMANCE:

This example shows the use of the resin compositions as adhesives. In this example, all proportions are given in parts per hundred parts of the total elastomer on a dry basis. Adhesives for tape and label applications were formulated as indicated in Table II.

TABLE II

| ADHESIVE FORMULATION | | | | |
|---|---|---|---|---|
| ·Raw Material | Adhesive | | | |
| | A | B | C | D |
| 76 RES 9413 | 100 | 100 | 100 | 100 |
| Resin Dispersion from Example 1 | 70 | --- | --- | --- |
| Resin Dispersion from Example 4 | --- | 70 | --- | --- |
| Resin Dispersion from Example 11 | --- | --- | 50 | --- |
| Resin Dispersion from Example 11 with 0.2% Wingstay L added to resin | --- | --- | --- | 50 |
| BOSTEX 24 (Antioxidant) | 1 | 1 | 1 | 50 |

76 RES 9413 is a carboxylated styrene-butadiene (SBR) latex emulsion sold by Union Chemicals Division of Union Oil Company of California. This elastomeric latex is believed to have a styrene content of about 35%, a solution viscosity of approximately 200 centipoise and approximately 50% solids in water. BOSTEX 24 is a dispersion of WINGSTAY L polymeric hindered phenolic antioxidant. The antioxidant dispersion is obtained from Akron Dispersions, Inc.

The adhesive formulation of adhesives A, B, C, and D were coated at approximately 20 pounds per ream (1 ream = 3,000 square feet) dry coating weight on a 2 mil Mylar (polyester) film and then fused at 70°C for approximately 5 minutes and dried for another 3 minutes in a 90°C oven. The dried products were slit into tapes/labels approximately one inch wide. The resulting adhesive tapes/labels were then tested for adhesion on a stainless steel panel according to Pressure Sensitive Tape Council, Glenwood, Illinois, using the 180° Peel (PSTC-1) test method. Loop Tack is a measure of a tape or label's ability to adhere to a given surface with minimum pressure. A one-inch wide tape or label was formed to make a loop. The adhesive part being on the outside loop. The loop is made in contact parallel to a stainless steel panel using an Instron tester.

Table III depicts the adhesive functional performance in tape/label form.

TABLE III

| TAPE/LABEL ADHESIVE FUNCTIONAL PERFORMANCE | | | | | |
|---|---|---|---|---|---|
| Responses: | Units: | Adhesive | | | |
| | | A | B | C | D |
| 180° Peel | Ounces/inch | 69 | 67 | 70 | 62 |
| Loop Tack | Ounces/inch | 82 | 51 | 77 | 64 |
| Rolling Ball Tack | Inches | >7.0 | >7.0 | 5.90 | 4.40 |

7

### Example 15

To compare the present invention with current commercial products, adhesive formulations A-D were made using 100 parts 76 RES 9413, 70 parts tackifier resin dispersion, and 1 part BOSTEX 24 antioxidant using:

A - The resin dispersion from Example 11.

B - A dispersion of disproportionated rosin, Ring and Ball softening point, 66°C.

C - A commercial dispersion of a glycerol ester of highly hydrogenated rosin, Ring and Ball softening point, 82°C.

D - A commercial dispersion of a glycerol ester of hydrogenated rosin, Ring and Ball softening point, 83°C.

The adhesive formulations were coated, dried, and tested for tape/label performance as above. Table IV depicts the functional performance.

### TABLE IV

| TAPE/LABEL ADHESIVE FUNCTIONAL PERFORMANCE VERSUS COMMERCIAL PRODUCTS | | | | | |
|---|---|---|---|---|---|
| RESPONSES | UNITS | ADHESIVE | | | |
| | | A | B | C | D |
| 180° Peel | Ounces/inch | 85 | 77 | 53 | 75 |
| Loop Tack | Ounces/inch | 94 | 58 | 58 | 80 |

Thus it is evident that the resin dispersion from Example 11 performs better than the commercial products in label and tape applications.

### Claims

1. A resinous composition comprising a reaction product of an ionizable polymer with a base, said reaction product being dispersed in water, said ionizable polymer being the reaction product of a cyclopentadiene polymer and a carboxylic acid or a derivative of said acid, said polymer having a softening point below about 150°C and an acid number of from 10 to 150.

2. A composition according to claim 1, wherein the cyclopentadiene polymer is a copolymer of cyclopentadiene and at least one other olefin, and/or wherein the olefin is styrene and/or alpha-pinene.

3. A composition according to claim 1 or 2, wherein the carboxylic acid or derivative thereof is one or more of rosin acid, acrylic acid and maleic anhydride and/or wherein the base is N,N-dimethylaminoethanol.

4. A composition according to any of claims 1 to 3, wherein the cyclopentadiene polymer contains a surfactant selected from fatty acid soaps, sulphonic acid salts, silicones, and polyglycols.

5. A composition according to any of claims 1 to 4, wherein the ionizable polymer has been modified by the addition of at least one compound selected from a polyterpene, rosin, polymerized rosin, rosin ester, terpene phenol, and a $C_5$ or $C_9$ hydrocarbon resin.

6. An aqueous latex adhesive composition comprising a latex elastomer, a tackifier dispersed in water, and, optionally, an antioxidant, said tackifier dispersed in water comprising a composition according to any of claims 1 to 5.

7. A composition according to claim 6, wherein the latex elastomer comprises natural rubber, a carboxylated styrene-butadiene copolymer or an acrylic acid-butyl acrylate-ethyl acrylate copolymer.

8. An adhesive tape or label produced by coating a suitable substrate such as paper, foil, fabric or polyester film, with a composition according to claim 6 or 7.

9 . A laminate produced by contacting a composition according to claim 6 or 7, on a sheet or roll of woven or nonwoven fabric and bonding to a second sheet or roll of polyethylene, polypropylene, foil or fabric.

10. A method for preparing a water dispersible resin composition comprising:

(a) reacting cyclopentadiene and at least one suitable olefin to form a polymer;

(b) reacting the polymer of (a) with a carboxylic acid or derivative thereof, or other suitable acid, to produce an acid functionalized or carboxylated polymer resin with a softening point of below about 150°C and an acid number of from 10 to 150;

(c) neutralizing the resulting acid functionalized or carboxylated polymer resin with a base to produce an ionizable resin product readily dispersible in water.

9